# FASCICULE DE BREVET EUROPEEN

(11) **EP 2 137 026 B1**
(45) Date de publication et mention de la délivrance du brevet: **22.02.2012**
(21) Numéro de dépôt: 08788182.7
(22) Date de dépôt: 15.04.2008
(51) Int. Cl.: B60N 2/30

(54) **SIEGE POUR VEHICULE AUTOMOBILE CONVERTIBLE EN SIEGE ENFANT DOS A LA ROUTE ET VEHICULE AUTOMOBILE ASSOCIE**
IN EINEN KINDERSITZ UMWANDELBARER AUTOMOBILSITZ MIT DEM RÜCKEN ZUR STRASSE UND ENTSPRECHENDES AUTOMOBIL
SEAT FOR AUTOMOBILE CONVERTIBLE INTO CHILD SEAT WITH THE BACK FACING ROAD AND RELATED AUTOMOBILE

(30) Priorité: 17.04.2007 FR 0754518
(43) Date de publication de la demande: 30.12.2009
(73) Titulaire: Peugeot Citroën Automobiles SA, 78140 Vélizy-Villacoublay (FR)
(72) Inventeur: NICOLAS, Daniel, F-78360 Montesson (FR); JOURDAN, Dominique, F-27700 Heuqueville (FR)
(86) Numéro de dépôt international: PCT/FR2008/050666
(87) Numéro de publication internationale: WO 2008/145890

(56) Documents cités:
- EP-A1- 0 965 478
- WO-A1-01/49518
- JP-A- 11 129 798

## Description

La présente invention concerne un siège pour véhicule automobile susceptible de passer d'une position de siège passager face à la route à une position de siège enfant dos à la route.

L'invention concerne également un véhicule automobile équipé d'un tel siège.

Depuis le 1^{er} janvier 1992 il est obligatoire d'utiliser des systèmes homologués pour faire voyager les enfants de moins de dix ans et ce, quelque soit le véhicule. Les enfants ne peuvent donc pas être assis à même les sièges.

Sont connus à cet effet les sièges autos prévus pour les enfants de moins de 25kg et les sièges rehausseurs pour les grands enfants jusqu'à 10 ans.

En ce qui concerne les sièges autos destinés particulièrement aux enfants de moins de 10 ou 13kg, ces sièges doivent être impérativement positionnés dos à la route en étant montés sur les sièges avant ou arrière du véhicule.

Par ailleurs, tous ces types de sièges additionnels sont fixés sur les sièges du véhicule soit par les points d'ancrage de la ceinture du siège, soit par le système Isofix directement fixé sur la caisse de la voiture prévoyant des gâches à crocheter.

Cependant, les sièges autos et les sièges rehausseurs présentent des inconvénients.

D'abord, ces systèmes nécessitent d'être sanglés sur la banquette arrière ou le siège avant à l'aide de la ceinture de sécurité. Il subsiste donc toujours un risque que la ceinture ne soit pas bouclée.

De plus, l'absence de solidarisation entre le siège enfant et le siège du véhicule pose des problèmes de sécurité en cas de freinage sec ou de virage serré puisque le siège enfant pourra avoir tendance à glisser.

Se pose également un autre problème de sécurité provenant du fait que le siège enfant est réalisé en un matériau plus léger, tel qu'une coque en polystyrène, que le siège du véhicule auquel il est attaché.

Enfin, le siège enfant est souvent laissé à demeure dans la voiture pour éviter son installation répétitive, et il peut donc gêner lors du transport de passagers ou d'objets encombrants.

Est connu pour résoudre ces problèmes, notamment par la publication EP 479 006, un siège permettant de transformer un siège passager face à la route en siège enfant dos à la route par la mise ne oeuvre de moyens d'entraînement.

Dans ce système, le siège est fait d'un dossier mobile entre une position formant dossier d'un passager face à la route et une position formant dossier d'un enfant dos à la route.

Ce siège comporte également une assise faite de deux parties mobiles dont l'une, centrale, sert d'assise à la fois pour le passager et pour l'enfant et la deuxième, faite des deux parties latérales de l'assise reliées par un élément de retenue peuvent être relevées pour maintenir latéralement et frontalement l'enfant installé dos à la route.

Mais, dans un tel système, le maintien de l'enfant n'est pas sécurisé. En effet, les deux partie latérales risquent de ne pas pouvoir retenir l'enfant poussé sur le coté en cas de virage serré.

Par ailleurs, dans la position enfant, l'assise n'est fixé à la caisse que par l'intermédiaire d'un axe de rotation ce qui fragilise le système. Le document JP 11129798, qui est considéré l'état de la technique la plus proche, montre aussi un siège convertible en siège enfant dos à la route.

Pour pallier aux inconvénients précités, le siège de l'invention comprend une assise unique pour chaque position, un dossier mobile par rapport à l'assise afin d'utiliser pour chacune des positions une surface d'adossement différente, des moyens d'articulation comportant au moins un premier axe de rotation afin de passer de manière réversible entre lesdites positions

Selon l'invention, la structure de l'assise est fixe entre lesdites positions afin de garantir quelque soit ladite position une robustesse et une sécurité sensiblement équivalente dudit siège, et en ce que le dossier de siège comporte un cadre monté à rotation autour du premier axe relativement à la structure de l'assise et une garniture centrale montée à rotation relativement au cadre autour d'un deuxième axe afin d'optimiser la forme et l'épaisseur dudit dossier.

De préférence, les moyens d'articulation comportent des moyens de verrouillage permettant pour chaque position d'améliorer la sûreté du siège.

Avantageusement, les moyens d'articulation comportent une poignée unique permettant de libérer tous les moyens de verrouillage quelle que soit la position du siège.

De plus, les moyens d'articulation comportent une première poignée permettant de libérer les moyens de verrouillage en position passager et une deuxième poignée permettant de libérer les moyens de verrouillage en position enfant.

Avantageusement, des premiers moyens de verrouillage comportent au moins un levier monté sur le dossier et destiné à s'attacher sur un axe monté sur la structure de l'assise afin de bloquer le premier axe en position passager.

De façon préférentielle, des seconds moyens de verrouillage comportent au moins un levier monté sur le cadre du dossier et destiné à s'attacher à un axe monté sur la garniture centrale du dossier afin de bloquer le deuxième axe en position passager.

Selon une variante, des troisièmes moyens de verrouillage comportent au moins un levier monté sur la structure de l'assise et destiné à bloquer par contact une partie du dossier afin de bloquer le premier axe en position enfant.

Avantageusement, au moins une partie des moyens de verrouillage sont montés élastiquement sur le siège.

On peut prévoir que l'assise comporte un système de déformation de la partie arrière de sa matelassure afin d'améliorer la fonction d'anti-sousmarinage en position enfant.

Avantageusement, le système de déformation comporte un ensemble sensiblement en forme de U monté mobile à rotation par rapport à la structure autour d'un troisième axe et relié aux moyens d'articulation par l'intermédiaire d'au moins une bielle afin d'utiliser le mouvement du dossier comme moyen actionneur dudit ensemble.

Enfin, le siège comporte au moins un point d'ancrage pour la mise en place d'un harnais.

L'invention concerne également un véhicule automobile comportant un siège tel que décrit ci-dessus.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en perspective avant du siège de l'invention en position de siège passager ;
- la figure 2 est une vue en perspective prise selon la flèche II de la figure 1 du siège de l'invention en position de siège enfant ;
- la figure 3 est une vue en perspective de la structure du siège de l'invention en position de siège passager ;
- la figure 4 est la même vue que celle de la figure 3 mais sur laquelle le siège de l'invention est en position de siège enfant ;
- la figure 5 est une vue agrandie de la partie inférieure du siège de l'invention prise selon la flèche V de la figure 3 ;
- les figures 6 et 7 sont des vues de coté de la structure du siège de l'invention représenté respectivement en position de siège passager et en position de siège enfant ;
- la figure 8 est une vue agrandie de la partie inférieure du siège de la figure 7; et
- les figures 9 et 10 sont des vues en perspective prises selon la flèche IX-X de la figure 1 du siège de l'invention représenté respectivement en position de siège passager et en position de siège enfant.

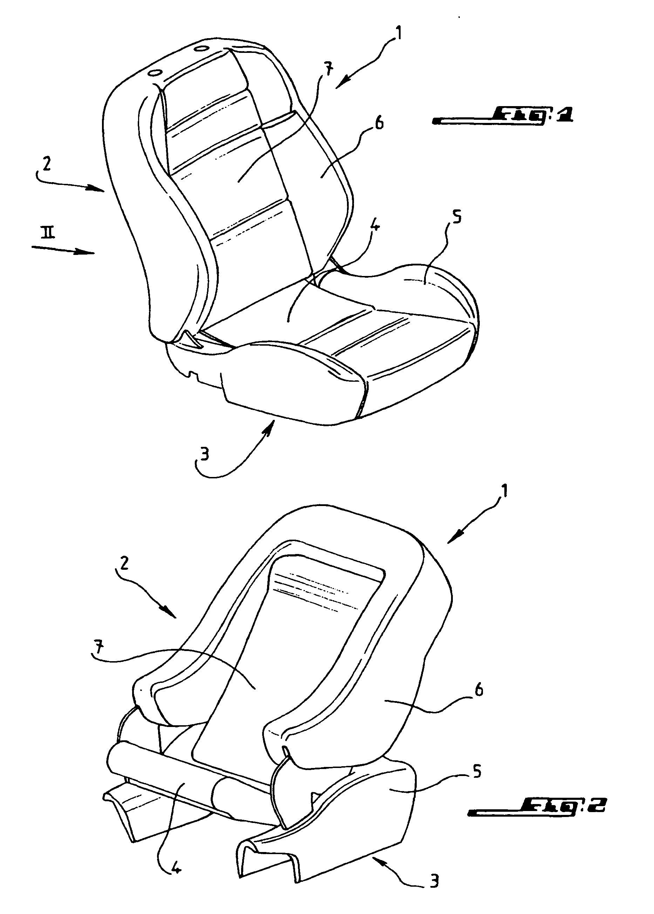

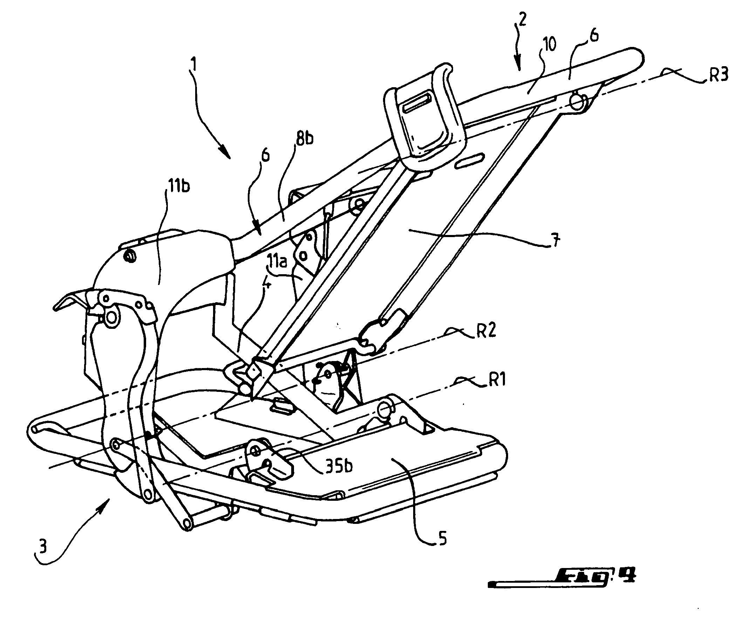

En référence aux figures 1 à 4, 9 et 10, le siège de l'invention 1 comporte un dossier 2 monté mobile en rotation par rapport à une assise 3.

L'assise 3 est faite de deux parties, soit une partie arrière mobile en rotation 4 dans la matelassure relativement à un cadre fixe 5. Le dossier 2 comporte d'une part un cadre mobile en rotation 6 relativement au cadre fixe d'assise 5, et d'autre part un support de médaillon 7 mobile par rapport au cadre mobile de dossier 6.

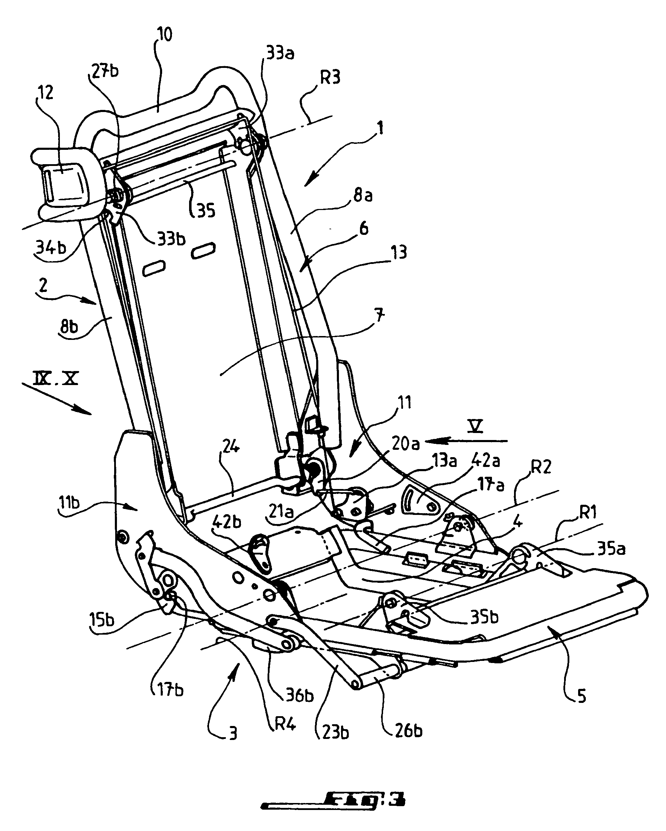

Plus précisément, comme visible sur les figures 3 à 5, le cadre 6 est fait de deux montants latéraux 8a,8b reliées entre eux au niveau de leurs extrémités supérieures par un élément de liaison 10. Le support de médaillon 7 s'étend entre les deux montants latéraux 8a,8b du cadre de dossier 6 sur approximativement toute la hauteur de ces montants. Le support de médaillon 7 est monté rotatif relativement au cadre 6 autour d'un axe R3 situé à l'extrémité supérieure de ce support 7, son extrémité inférieure étant susceptible de se désolidariser du cadre de dossier 6 comme il sera expliqué plus loin.

Le cadre d'assise 6 est rigidement solidaire de deux éléments de liaison 11a,11b monté pivotants autour d'un axe R2 relativement au cadre fixe d'assise 5.

Quant à la partie mobile arrière 4 de l'assise, elle est montée pivotante autour d'un axe R1 relativement au cadre fixe d'assise 5.

Les éléments impliqués dans l'entraînement du siège 1 depuis sa position passager jusqu'à sa position enfant sont décrits ci-après.

Une poignée 12 est montée sur la partie supérieure du cadre de dossier 6. Deux câbles mécaniques 13 relient respectivement cette poignée 12 à une des bascules 13a et 13b qui sont montées pivotantes à respectivement un des éléments de liaison correspondant 11a et 11b autour d'un axe de rotation R5.

Chaque bascule 13a,13b est solidaire d'un levier de verrouillage 15a,15b de l'axe R2 par l'intermédiaire d'un axe 16a,16b. Chaque levier 15a,15b forme crochet pour permettre le verrouillage sur respectivement un pion 17a,17b rigidement solidaire du cadre fixe d'assise 5.

Chaque bascule 13a,13b est en outre solidaire d'un levier de verrouillage 18a,18b de l'axe R3 afin de commander sensiblement simultanément leur mouvement. Chaque levier 18a, 18b est ainsi relié à une bascule 13a, 13b par l'intermédiaire d'un fil de commande 21a,21b relié à une bielle 20a,20b rigidement solidarisé au levier de verrouillage 18a,18b par l'intermédiaire d'un axe 22a,22b. chaque levier 18a,18b formant crochet peut ainsi être verrouillé sur un pion 24 du support de médaillon 7.

Par ailleurs, deux bielles 23a et 23b sont montées articulées par leur extrémité arrière à chaque élément de liaison 11a et 11b autour d'un axe R4, et articulées par leur extrémité avant autour d'un axe R7 à respectivement une des tiges 26a et 26b rigidement solidaire de la partie arrière mobile d'assise 4.

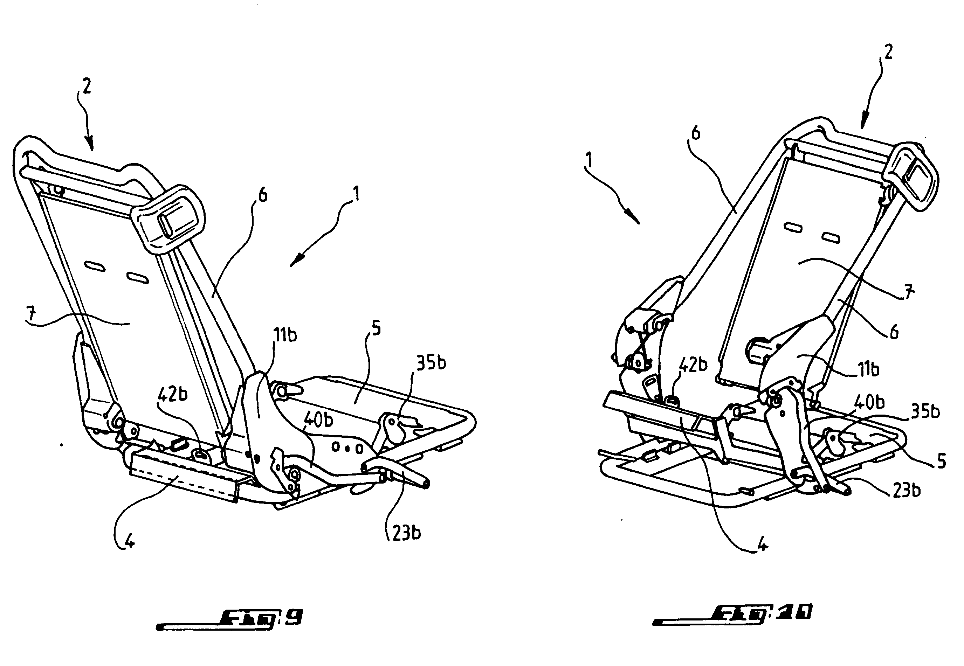

Le passage de la position de siège passager à la position de siège enfant est décrite ci-après en référence aux mêmes figures 3 à 5 mais également aux figures 9 et 10.

L'actionnement de la poignée 12 provoque la tension des câbles mécaniques 13 qui fait pivoter chaque bascule 13a,13b autour de l'axe R5 ce qui entraîne simultanément le dégagement des leviers 15a,15b des pion 17a,17b et le dégagement des leviers 18a,18b des pions 24. En effet, chaque bascule tire sur chaque fil de commande 21a,21b et contraint de ce fait en rotation la bielle 20a,20b solidaire de l'axe 22a,22b et du levier 18a,18b.

La partie inférieure du support de médaillon 7 étant libérée, un ressort de torsion 27b au niveau de l'axe R3 fait pivoter ce support 7 autour de cet axe R3.

De plus, chaque levier 15a,15b étant libéré de son pion 17a,17b, le pivotement de l'élément de liaison 11a,11b par rapport au cadre fixe d'assise 5 est rendue possible, c'est-à-dire que le mouvement du cadre de dossier 6 autour de l'axe R2 est rendue possible. Il suffit, par conséquent, d'une poussée vers l'avant par l'utilisateur du cadre de dossier 6 par exemple au moyen de la poignée 12.

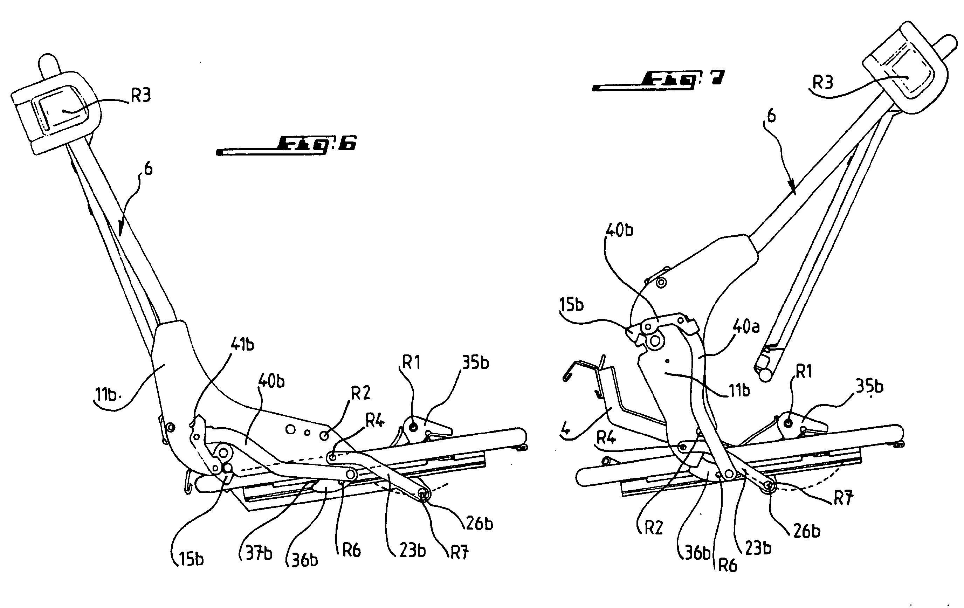

En référence plus particulièrement aux figures 6 et 7, ce pivotement autour de l'axe R2 de chaque élément de liaison 11a,11b contraint le déplacement de chaque tige 26a,26b sous l'action de leur bielle 23a,23b. Ce déplacement est en forme d'arc de cercle autour de l'axe R1 et entraîne le basculement de la partie arrière de l'assise 4 autour de cet axe R1. La partie arrière 4 monté dans la matelassure forme ainsi un système de déformation de la partie arrière de la matelassure afin d'améliorer la fonction d'anti-sousmarinage en position enfant.

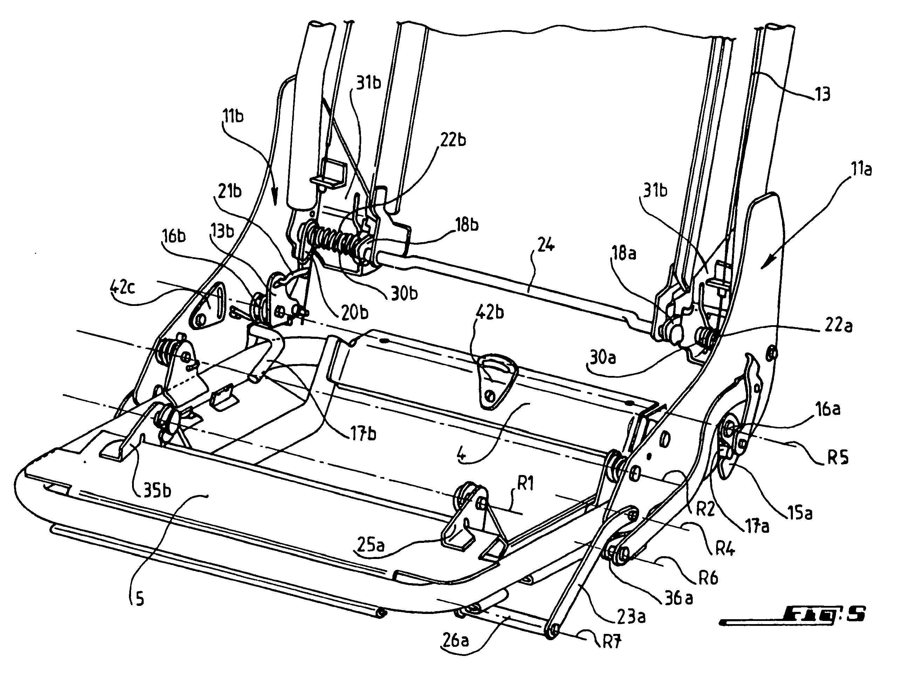

Par le relâchement de la poignée 12, le câble 13 relâche la contrainte sur chaque bascule 13a,13b par détente de son ressort associé 16a, 16b. De manière similaire, chaque levier 18a, 18b grâce au mouvement de retour de chaque bascule 13a, 13b et de son ressort associé 30a,30b sur l'axe 22a,22b (figure 5) retrouve sa position initiale. Incidemment, c'est la chaîne entière des éléments mécaniques qui revient à sa position initiale à savoir le levier de verrouillage de l'axe R2 15a, 15b, la bielle 20a,20b, le fil de commande 21a,21b, de l'axe 22a,22b et le levier de verrouillage de l'axe R3 18a,18b. Le retour en position initiale de tous les éléments est limité par la présence d'une tôle pliée 31a,31b formant butée arrière pour chaque bielle 20a,20b.

Le verrouillage du siège de l'invention dans la position de siège enfant est assuré de la façon suivante.

En ce qui concerne le verrouillage du support de médaillon 7, le pivotement de ce support 7 par rapport au cadre de dossier 6 est assuré par un ressort de torsion 27b jusqu'à une butée 33a,33b comportant une découpe 34b dans laquelle vient s'encliqueter, dans la position de siège enfant, un pion 35 parallèle à l'axe R3 et qui s'étend sur toute la largeur du support de médaillon 7. La butée 33a,33b est configurée de façon que l'angle entre le support de médaillon 7 et le cadre de dossier 6 soit sensiblement égal à 23°.

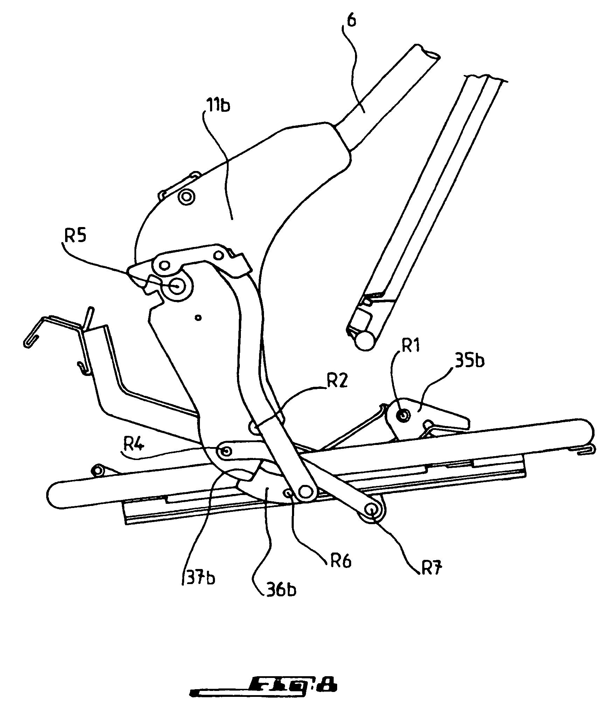

Le verrouillage du cadre de dossier 6 relativement au cadre fixe d'assise 5 est assuré par deux éléments indépendants 36a, 36b de chaque côté de l'assise 3. Chaque levier 36a, 36b est entraîné en rotation selon un axe R6 (figure 8) solidaire du cadre fixe d'assise 5 par l'action d'un ressort de torsion (non visible) dans le même sens de rotation que le cadre de dossier 6 entre sa position passager et sa position enfant. Comme visible à la figure 8, le levier 36b tourne ainsi autour de l'axe R2 dans le sens rétrograde jusqu'à une position dans laquelle l'élément de liaison 11b s'engage dans une encoche 37b dont la forme permet d'éviter le retour du cadre de dossier 6 vers la position passager. On prévoit par cette configuration que l'angle pris entre le cadre de dossier 6 et le cadre fixe d'assise 5 soit sensiblement de 70°.

De cette façon, la rotation du support de médaillon 7 étant bloquée par les butées 33a, 33b, la rotation du cadre de dossier 6 étant bloquée par les leviers 37a,37b, le siège 1 est verrouillé dans la position siège enfant dos à la route.

Le déverrouillage et le passage de la position siège enfant à la position siège passage s'effectue de la façon suivante.

L'utilisateur actionne la poignée 12 qui agit simultanément, comme indiqué lors du passage en position de siège enfant, sur les bascules 13a,13b, les axes 16a,16b portés selon R2, les leviers de verrouillage de l'axe R2 15a, 15b, les bielles 20a,20b, les fils de commande 21a,21b, les axes 22a,22b et les leviers de verrouillage 18a,18b de l'axe R3.

Cet actionnement de la poignée 12 déverrouille également les leviers 37a et 37b. Comme visible sur la figure 7, cela est rendue possible par un système de deux bielles 40b et 41b. La première bielle 40b est par son extrémité montée articulée au levier 36b et par son extrémité arrière montée articulée à l'extrémité avant de la deuxième bielle 41b (les références sont mauvaises sur la figure 7 40a et 40b à changer en 40b et 41b) dont l'extrémité arrière est articulée au levier de verrouillage de l'axe R2 15b. Ainsi lorsque la poignée 12 est activée, le levier 36b est entraîné en rotation autour de l'axe R6 dans le sens inverse des aiguilles d'une montre en s'opposant à l'effort de ressort associé de torsion (non visible).

Cette configuration autorise donc le retour des leviers 36a,36b vers leur position initiale en allant à l'encontre de l'effort imposé par leur ressort de torsion et par la même, autorise le retour du cadre d'assise 6 vers sa position siège passager par application d'une force sur ce cadre 6 vers l'arrière.

Enfin, le verrouillage du siège 1 en position passager s'effectue, par exemple, par application du poids du passager sur le siège grâce à la forme des leviers de verrouillage 18a,18b et 15a,15b qui permettent l'encliquetage de ces leviers dans les pions correspondants 24,17a,17b par la simple application de ce poids. Néanmoins, l'actionnement de la poignée 12 au voisinage de la position passager permet de faciliter l'attache desdits leviers sur leur pion respectif.

Il est également prévu trois points d'ancrages 42a,42b,42c pour la mise en place d'un harnais destiné à l'enfant, fixés respectivement sur un premier élément de liaison 11a, sur la partie mobile de l'assise 4 et sur le deuxième élément de liaison 11b.

Par les moyens décrits précédemment, le passage du siège de la position passager à la position siège enfant est simple puisque n'impliquant que la poignée 12 et l'action d'une force de poussée du cadre de dossier 7 vers l'avant du véhicule.

Par ailleurs, le siège en position enfant est sécurisé. D'abord, le maintien latéral de l'enfant est assuré par le cadre de dossier 6 sur toute la hauteur de l'assise. Plus encore, la présence d'une partie fixe d'assise 5 permet à ce siège d'être fixé fermement à la caisse du véhicule.

Pour des raisons pratiques, un tel siège s'applique plus particulièrement à un siège passager avant mais peut, par exemples dans les monospaces, s'adapter à des sièges arrière.

A titre d'alternative, le système de bielles 40a,40b et 41a,41b peut être substitué par au moins une deuxième poignée qui sera utilisée pour débloquer spécifiquement les leviers 36a, 36b lorsque l'on veut repasser de la position enfant à la position passager. Chaque nouvelle poignée est ainsi utilisée pour déplacer manuellement en contraignant les ressorts de torsion associés par exemple à rotation ou à translation le ou les leviers 36a, 36b.

De plus, il peut être prévu des articulations supplémentaires pour permettre la rotation du cadre 6 par rapport aux éléments de liaison 11a, 11b afin d'offrir un moyen de réglage de l'inclinaison du dossier 2 par rapport à l'assise en position passager. De même, la structure 5, c'est-à-dire la partie fixe, de l'assise 3 peut être reliée à des systèmes du type glissière et/ou du type élévateur pour déplacer le siège en longueur et/ou en largeur et/ou en hauteur par rapport au plancher du véhicule.

## Revendications

1. Siège (1) pour véhicule automobile susceptible de passer d'une position de siège passager face à la route à une position de siège enfant dos à la route, ledit siège comprenant une assise (3) unique pour chaque position, un dossier (2) mobile par rapport à l'assise afin d'utiliser pour chacune des positions une surface d'adossement différente, des moyens d'articulation comportant au moins un premier axe de rotation (R2) afin de passer de manière réversible entre lesdites positions, la structure (5) de l'assise (3) étant fixe entre lesdites positions afin de garantir quelque soit ladite position une robustesse et une sécurité sensiblement équivalente dudit siège, l'assise (3) étant faite en deux parties dont la partie arrière mobile en rotation (4) dans la matelassure constitue un système de déformation de la partie arrière de la matelassure afin d'améliorer la fonction d'anti-sousmarinage en position enfant, **caractérisé en ce que** le dossier de siège (2) comporte un cadre (6) monté à rotation autour du premier axe (R2) relativement à la structure (5) de l'assise (3) et une garniture centrale (7) montée à rotation relativement au cadre (6) autour d'un deuxième axe (R3) afin d'optimiser la forme et l'épaisseur dudit dossier.

2. Siège (1) selon la revendication 1, **caractérisé en ce que** les moyens d'articulation comportent des moyens de verrouillage (15a, 15b, 18a, 18b, 36a, 36b) permettant pour chaque position d'améliorer la sûreté du siège (1).

3. Siège (1) selon la revendication 2, **caractérisé en ce que** les moyens d'articulation comportent une poignée (12) unique permettant de libérer tous les moyens de verrouillage (15a, 15b, 18a, 18b, 36a, 36b) quelle que soit la position du siège (1).

4. Siège (1) selon la revendication 3, **caractérisé en ce que** les moyens d'articulation comportent une première poignée (12) permettant de libérer les moyens de verrouillage (15a, 15b, 18a, 18b) en position passager et une deuxième poignée permettant de libérer les moyens de verrouillage (36a, 36b) en position enfant.

5. Siège (1) selon l'une des revendications 2 à 4, **caractérisé en ce que** des premiers moyens de verrouillage comportent au moins un levier (15a, 15b) monté sur le dossier (2) et destiné à s'attacher sur un axe (17a, 17b) monté sur la structure (5) de l'assise (3) afin de bloquer le premier axe (R2) en position passager.

6. Siège (1) selon l'une des revendications 2 à 5, **caractérisé en ce que** des seconds moyens de verrouillage comportent au moins un levier (18a, 18b) monté sur le cadre (6) du dossier (2) et destiné à s'attacher à un axe (24) monté sur la garniture centrale (7) du dossier (2) afin de bloquer le deuxième axe (R3) en position passager.

7. Siège (1) selon l'une des revendications 2 à 6, **caractérisé en ce que** des troisièmes moyens de verrouillage comportent au moins un levier (36a, 36b) monté sur la structure (5) de l'assise (3) et destiné à bloquer par contact une partie (11a, 11b) du dossier (6) afin de bloquer le premier axe (R2) en position enfant.

8. Siège (1) selon l'une des revendications 2 à 7, **caractérisé en ce qu'**au moins une partie des moyens de verrouillage (15a, 15b, 18a, 18b, 36a, 36b) sont montés élastiquement sur le siège (1).

9. Siège (1) selon l'une des revendications précédentes, **caractérisé en ce que** le système de déformation (4) comporte un ensemble sensiblement en forme de U monté mobile à rotation par rapport à la structure (5) autour d'un troisième axe (R1) et relié aux moyens d'articulation par l'intermédiaire d'au moins une bielle (23a,23b) afin d'utiliser le mouvement du dossier (2) comme moyen actionneur dudit ensemble.

10. Siège (1) selon l'une quelconque des revendications précédentes, **caractérisé en ce qu'**il comporte au moins un point d'ancrage (42a, 42b, 42c) pour la mise en place d'un harnais.

11. Véhicule automobile comportant un siège (1) conforme à l'une des revendications précédentes.

## Claims

1. A seat (1) for a motor vehicle, able to be converted from a passenger seat position facing the road to a child's seat position with the back towards the road, the said seat comprising a single seating portion (3) for each position, a back (2) which is movable with respect to the seating portion so as to use a different back-resting surface for each of the positions, articulation means comprising at least a first rotation axis (R2) so as to pass in a reversible manner between the said positions, the structure (5) of the seating portion (3) being fixed between the said positions so as to guarantee, whatever the said position, a substantially equivalent strength and security of the said seat, the seating portion (3) being made in two parts, of which the rear part, movable in rotation (4) in the padding constitutes a system of deformation of the rear part of the padding so as to improve the anti-submarining function in the child position, **characterized in that** the seat back (2) comprises a frame (6) rotatably mounted about the first axis (R2) relative to the structure (5) of the seating portion (3) and a central fitting (7) rotatably mounted relative to the frame (6) about a second axis (R3) so as to optimize the shape and the thickness of the said back.

2. The seat (1) according to Claim 1, **characterized in that** the articulation means comprise locking means (15a, 15b, 18a, 18b, 36a, 36b) permitting the safety of the seat (1) to be improved for each position.

3. The seat (1) according to Claim 2, **characterized in that** the articulation means comprise a single handle (12) permitting all the locking means (15a, 15b, 18a, 18b, 36a, 36b) to be released, whatever the position of the seat (1).

4. The seat (1) according to Claim 3, **characterized in that** the articulation means comprise a first handle (12) permitting the locking means (15a, 15b, 18a, 18b) to be released in the passenger position, and a second handle permitting the locking means (36a, 26b) to be released in the child position.

5. The seat (1) according to one of Claims 2 to 4, **characterized in that** first locking means comprise at least one lever (15a, 15b) mounted on the back (2) and intended to attach itself on an axis (17a, 17b) mounted on the structure (5) of the seating portion (3) so as to lock the first axis (R2) in the passenger position.

6. The seat (1) according to one of Claims 2 to 5, **characterized in that** second locking means comprise at least one lever (18a, 18b) mounted on the frame (6) of the back (2) and intended to attach itself to an axis (24) mounted on the central fitting (7) of the back (2) so as to lock the second axis (R3) in the passenger position.

7. The seat (1) according to one of Claims 2 to 6, **characterized in that** third locking means comprise at least one lever (36a, 36b) mounted on the structure (5) of the seating portion (3) and intended to lock by contact a part (11a, 11b) of the back (6) so as to lock the first axis (R2) in the child position.

8. The seat (1) according to one of Claims 2 to 7, **characterized in that** at least a portion of the locking means (15a, 15b, 18a, 18b, 36a, 36b) are mounted elastically on the seat (1).

9. The seat (1) according to one of the preceding claims, **characterized in that** the deformation system (4) comprises a substantially U-shaped assembly mounted so as to be rotatably movable with respect to the structure (5) about a third axis (R1) and connected to the articulation means via at least one connecting rod (23a, 23b) so as to use the movement of the back (2) as an actuating means of the said assembly.

10. The seat (1) according to any one of the preceding claims, **characterized in that** it comprises at least one anchoring point (42a, 42b, 42c) for putting in place a harness.

11. A motor vehicle comprising a seat (1) according to one of the preceding claims.

## Patentansprüche

1. Sitz (1) für Kraftfahrzeug, der von einer Sitzposition mit dem Insassen in Fahrtrichtung auf eine Kindersitzposition mit dem Rücken zur Fahrtrichtung übergehen kann, wobei der Sitz eine einzige Sitzfläche (3) für jede Position aufweist, eine Rückenlehne (2), die in Bezug zu der Sitzfläche beweglich ist, um für jede der Positionen eine unterschiedliche Anlehnfläche zu verwenden, Mittel zum Anlenken, die mindestens eine erste Rotationsachse (R2) aufweisen, um umkehrbar zwischen den Positionen überzugehen, wobei die Struktur (5) der Sitzfläche (3) zwischen den Positionen stationär ist, um ungeachtet der Position eine im Wesentlichen gleichwertige Robustheit und Sicherheit des Sitzes zu garantieren, wobei die Sitzfläche (3) aus zwei Teilen hergestellt ist, von welchen der hintere in Drehung bewegliche Teil (4) in der Polsterung ein Verformungssystem des hinteren Teils der Polsterung bildet, um die Abtauchschutzfunktion in der Kindersitzposition zu verbessern, **dadurch gekennzeichnet, dass** diese Sitzrückenlehne (2) einen Rahmen (6) aufweist, der um eine erste Achse (R2) in Bezug zu der Struktur (5) der Sitzfläche (3) drehend montiert ist, und einen zentralen Polsterungsteil (7), der in Bezug zu dem Rahmen (6) um eine zweite Achse (R3) drehend montiert ist, um die Form und die Stärke der Rückenlehne zu optimieren.

2. Sitz (1) nach Anspruch 1, **dadurch gekennzeichnet, dass** die Anlenkmittel Mittel zum Verriegeln (15a, 15b, 18a, 18b, 36a, 36b) aufweisen, die für jede Position das Verbessern der Sicherheit des Sitzes (1) erlauben.

3. Sitz (1) nach Anspruch 2, **dadurch gekennzeichnet, dass** die Anlenkmittel einen einzigen Griff (12) aufweisen, der es erlaubt, alle Verriegelungsmittel (15a, 15b, 18a, 18b, 36a, 36b) ungeachtet der Position des Sitzes (1) freizugeben.

4. Sitz (1) nach Anspruch 3, **dadurch gekennzeichnet, dass** die Anlenkmittel einen ersten Griff (12) aufweisen, der es erlaubt, die Verriegelungsmittel (15a, 15b, 18a, 18b) in Beifahrerposition zu befreien, und einen zweiten Griff, der es erlaubt, die Verriegelungsmittel (36a, 36b) in Kindersitzposition zu befreien.

5. Sitz (1) nach einem der Ansprüche 2 bis 4, **dadurch gekennzeichnet, dass** die ersten Verriegelungsmittel mindestens einen Hebel (15a, 15b) aufweisen, der auf die Rückenlehne (2) montiert und dazu bestimmt ist, an einer Achse (17a, 17b) befestigt zu werden, die auf die Struktur (5) der Sitzfläche (3) montiert ist, um die erste Achse (R2) in der Beifahrerposition zu blockieren.

6. Sitz (1) nach einem der Ansprüche 2 bis 5, **dadurch gekennzeichnet, dass** die zweiten Verriegelungsmittel mindestens einen Hebel (18a, 18b) aufweisen, der auf den Rahmen (6) der Rückenlehne (2) montiert und dazu bestimmt ist, an einer Achse (24) befestigt werden, die auf den zentralen Polsterungsteil (7) der Rückenlehne (2) montiert ist, um die zweite Achse (R3) in Beifahrerposition zu blockieren.

7. Sitz (1) nach einem der Ansprüche 2 bis 6, **dadurch gekennzeichnet, dass** die dritten Verriegelungsmittel mindestens einen Hebel (36a, 36b) aufweisen, der auf die Struktur (5) der Sitzfläche (3) montiert und dazu bestimmt ist, durch Kontakt einen Teil (11a, 11b) der Rückenlehne (6) zu blockieren, um die erste Achse (R2) in Kinderposition zu blockieren.

8. Sitz (1) nach einem der Ansprüche 2 bis 7, **dadurch gekennzeichnet, dass** mindestens ein Teil der Verriegelungsmittel (15a, 15b, 18a, 18b, 36a, 36b) elastisch auf den Sitz (1) montiert ist.

9. Sitz (1) nach einem der vorhergehenden Ansprüche, **dadurch gekennzeichnet, dass** das Verformungssystem (4) eine Einheit aufweist, die im Wesentlichen eine U-Form hat, die in Bezug zu der Struktur (5) um eine dritte Achse (R1) drehend beweglich montiert und mit den Anlenkmitteln über mindestens einen Schwingarm (23a, 23b) verbunden ist, um die Bewegung der Rückenlehne (2) als Betätiger der Einheit zu verwenden.

10. Sitz (1) nach einem der vorhergehenden Ansprüche, **dadurch gekennzeichnet, dass** er mindestens eine Verankerungsstelle (42a, 42b, 42c) zum Anbringen eines Gurtzeugs aufweist.

11. Kraftfahrzeug, das einen Sitz (1) nach einem der vorhergehenden Ansprüche aufweist.
